# EUROPEAN PATENT SPECIFICATION

(11) **EP 4 506 852 B1**
(45) Date of publication and mention of the grant of the patent: **04.11.2026**
(21) Application number: 23784216.6
(22) Date of filing: 30.03.2023
(51) Int. Cl.: G06F 111/18, A63F 13/825, B60W 50/08, G01C 21/34

(54) **CAR COMPUTER AVATAR INTERACTION METHOD AND SYSTEM, AND VEHICLE AND STORAGE MEDIUM**
VERFAHREN UND SYSTEM ZUR INTERAKTION ZWISCHEN FAHRZEUGCOMPUTERAVATAR SOWIE FAHRZEUG UND SPEICHERMEDIUM
PROCÉDÉ ET SYSTÈME D'INTERACTION D'AVATAR D'ORDINATEUR DE VOITURE, ET VÉHICULE ET SUPPORT DE STOCKAGE

(30) Priority: 06.04.2022 CN 202210356483
(43) Date of publication of application: 12.02.2025
(73) Proprietor: Great Wall Motor Company Limited, Hebei 071000 (CN)
(72) Inventor: SUN, Xuelong, Baoding, Hebei 071000 (CN); LI, Shuhui, Baoding, Hebei 071000 (CN); CHENG, Siyu, Baoding, Hebei 071000 (CN); ZHEN, Lintao, Baoding, Hebei 071000 (CN)
(74) Representative: Klunker IP Patentanwälte PartG mbB
(86) International application number: PCT/CN2023/085141
(87) International publication number: WO 2023/193652

(56) References cited:
- CN-A- 109 448 737
- CN-A- 111 785 246
- CN-A- 112 034 989
- CN-A- 113 537 443
- CN-A- 113 808 281
- CN-A- 115 214 696
- DE-A1- 102015 010 572
- US-A1- 2008 269 958
- US-A1- 2017 267 256
- US-B1- 10 692 371

## Description

### TECHNICAL FIELD

The invention pertains to the field of vehicle management technologies, and particularly to a method for vehicle-machine virtual image interaction, a corresponding vehicle, and a corresponding computer-readable storage medium.

### BACKGROUND

With the improvement of living standards, automobiles have become indispensable tools for travel. However, due to the low level of intelligence in automobiles, a user, when using an automobile, need to individually select various parameters of the automobile, such as throttle sensitivity, steering torque, etc. Additionally, when the user needs to change parameters, he/her has to select and adjust each parameter one by one, which brings inconvenience.

DE 10 2015 010572 A1 discloses a method for interactively assisting a driver of a vehicle in operating the vehicle by outputting operating assistance information depending on a driving situation and/or operating behavior of the driver and/or a condition of the driver identified by sensors, wherein the output is visual, auditory, and/or haptic. The method further comprises the steps of collecting data on user behavior of the driver and/or the condition of the driver at least in relation to at least one other vehicle previously used by the driver and providing a user profile based on the collected data in a data network independent of the vehicle, wherein the output of the operating support information is additionally performed depending on the user profile. The invention also relates to a system for the implementation of such a method.

US 2008/269958 A1 discloses a method for emotively conveying information to a user of a device including receiving input indicative of an operating state of the device, transforming the input into data representing a simulated emotional state and generating data representing an avatar that expresses the simulated emotional state. The method also includes displaying the avatar, receiving a query from the user regarding the simulated emotional state expressed by the avatar and responding to the query.

### SUMMARY

### Technical Problem

One objective of the invention is to provide a method for vehicle-machine virtual image interaction, a corresponding vehicle, and a corresponding computer-readable storage medium, which can address the problem of low vehicle intelligence.

### Technical Solution

The object is achieved with the features of independent claim 1 regarding the method, with the features of independent claim 14 regarding the vehicle, and with the features of independent claim 15 regarding the computer-readable storage medium.

### Beneficial Effects

Beneficial effects of the invention include that: when the vehicle is started or in operation, the personality type of the virtual image in the vehicle machine is first obtained, then the vehicle control strategy is determined according to the personality type, and finally, the vehicle control strategy is utilized to control the vehicle to operate. Compared to the existing technology where various parameters of the vehicle need to be individually configured, the invention associates the personality type of the virtual image with the vehicle control strategy. Thus, when configuring a vehicle, users only need to configure the personality type of the virtual image to obtain the vehicle control strategy, which makes the configuration of the vehicle simple and fast, and enhances the vehicle's automation level.

### BRIEF DESCRIPTION OF THE DRAWINGS

FIG. 1 is a flowchart illustrating a method for vehicle-machine virtual image interaction;
FIG. 2 is a flowchart illustrating a method for outputting professional knowledge;
FIG. 3 is a diagram illustrating various avatars of the virtual image;
FIG. 4 is a flowchart illustrating a method for determining a driving route;
FIG. 5 is a diagram illustrating an architecture of a virtual human;
FIG. 6 is a structural diagram illustrating a system for vehicle-machine virtual image interaction; and
FIG. 7 is a structural diagram illustrating a vehicle.

### DETAILED DESCRIPTION

To illustrate the objectives, technical solutions, and advantages of the invention more clearly, the following detailed description will be given in conjunction with the accompanying drawings.

The terms "first," "second," "third," etc., are used solely for descriptive purposes and should not be understood as indicating or implying relative importance or implicitly specifying the quantity of technical features. The term "multiple" means two or more, unless otherwise specifically defined.

With the rapid development of technologies such as artificial intelligence and virtual reality, virtual digital humans are increasingly being applied in various fields. Virtual digital humans are AI robots with human characteristics formed by utilizing digital modeling technology, simulating real human expressions and features through 3D graphics rendering and motion capture technology, and incorporating deep learning, semantic understanding, and speech synthesis technologies.

Currently, with the development of automobiles, in-vehicle virtual digital humans have already been applied in vehicles. However, the settings for the virtual images of in-vehicle virtual digital humans are relatively simplistic. Users can only customize the attire and facial features of the virtual image. Due to the limited customization options available to users, it cannot meet the diverse needs of users for virtual images, resulting in a poor personalized experience.

In a method for vehicle-machine (also referred as vehicle-mounted terminal or in-vehicle infotainment system or vehicle terminal, for example HUT) virtual image interaction provided by the invention, the users are allowed to customize various information about the virtual image in the vehicle-machine, thus, the different needs of various users for the virtual image in the vehicle-machine are met.

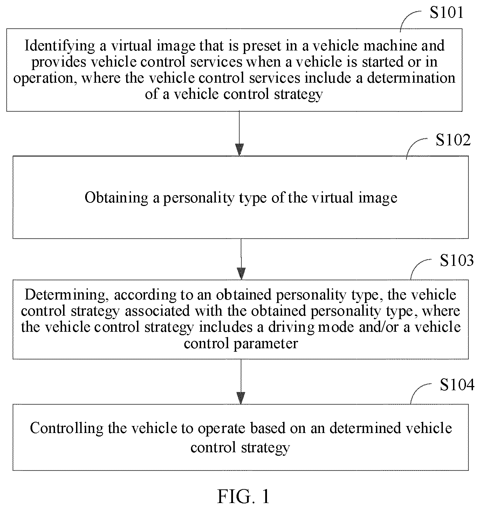

FIG. 1 shows a schematic flowchart of a method for vehicle-machine virtual image interaction provided by the invention. Referring to FIG. 1, the steps of the method are described in detail as follows:
In step S101, a virtual image is identified that is preset in a vehicle machine and provides vehicle control services when a vehicle is started or in operation, where the vehicle control services include a determination of a vehicle control strategy.

The virtual image is preset by a user or preset at a factory. The virtual image may include a personality type, an appearance, an occupation, a service content of the virtual image, and the like. Particularly, the virtual image may be set by the user through a handheld terminal or a display device in the vehicle, as an example, the handheld terminal may be a mobile phone, a tablet, etc.

The vehicle's start-up may be determined by detecting a location of a vehicle key. The vehicle in operation may be determined by the vehicle's speed detected by a speed sensor. Alternatively, the vehicle in operation may also be determined by detecting the vehicle's gear position, the vehicle is determined to be in operation when it is detected that the vehicle is in forward or reverse gear.

The vehicle control services may also include a determination of a driving route.

In step S102, a personality type of the virtual image is obtained.

The personality type of the virtual image may be set by the user through a handheld terminal. The personality type of the virtual image may also be set by the user through a display device in the vehicle.

As an example, when a setting page of the virtual image is presented on the display device of the vehicle, the personality type of the virtual image may be set by the user by selecting information on the setting page.

The personality type of the virtual image may be gentle, active, cute, rational, enthusiastic, talkative, loyal, etc. When setting the virtual image, the user may select any one of these personality types.

In step S103, the vehicle control strategy associated with the obtained personality type is determined according to the obtained personality type, where the vehicle control strategy includes a driving mode and/or a vehicle control parameter.

The driving mode may include an economic mode, a sport mode, or a comfort mode. The vehicle control parameter includes one or more of throttle sensitivity, steering torque, fuel injection amount, engine torque, and engine speed.

The personality type may be stored in association with the driving mode. The personality type may also be stored in association with the vehicle control parameter. Additionally, the personality type may be stored in association with both the driving mode and the vehicle control parameter.

For instance, different personality types preset in the vehicle are associated with different vehicle control strategies. For example, gentle and hedonistic types may be stored in association with the comfort mode, active and aggressive types may be stored in association with the sport mode, and rational and frugal types may be stored in association with the economic mode.

In step S104, the vehicle is controlled to operate based on the determined vehicle control strategy.

The vehicle control strategy is used to configure the vehicle.

The personality type of the preset virtual image is first obtained, then the vehicle control strategy is determined according to the personality type, and finally, the vehicle control strategy is utilized to control the vehicle to operate. By associating the virtual image's personality type with the vehicle control strategy, the user when configuring the vehicle can obtain the vehicle control strategy simply by configuring the virtual image's personality type. Compared to the existing technology where various vehicle items need to be individually configured, the invention eliminates the process of configuring the vehicle control strategy, which makes the vehicle configuration simple and fast, and enhances the vehicle's intelligence level.

In one possible implementation, after step S102, the method may also include a step of:
determining a speech synthesis strategy associated with the obtained personality type according to the obtained personality type, where the speech synthesis strategy includes at least one of timbre, corpus, and tone.

The personality type is also stored in association with the speech synthesis strategy, and the virtual image has the function of a speech synthesis strategy associated with the personality type. Particularly, the personality type is associated with TTS (Text To Speech, from text to speech), the virtual image's speech information may be determined through the personality type. Different personality types may be associated with different speech synthesis strategies.

Additionally, the personality type may be associated with the corpus, which includes response information determined based on the user's voice input during human-machine interaction. For example, if the user says "Hello," the response information might be "Hello."

The user can determine the speech synthesis strategy for the virtual image by setting the personality type, thereby the number of configuration items required when configuring the vehicle's virtual image is reduced and the configuration efficiency is improved.

In one possible implementation, the method may also include steps S201 and S202.

In step S201, a profession of the virtual image is obtained.

The virtual image's profession may be a doctor, a lawyer, a teacher, an actor, a police officer, a civil servant, etc. When setting the virtual image, the user may choose one of these professions.

In step S202, the professional knowledge information associated with the virtual image's profession is determined according to the profession of the virtual image.

The profession is associated with corresponding professional knowledge information, the associated professional knowledge information associated with the virtual image's profession is determined according to the obtained profession of the virtual image, and the virtual image has an ability to interact with professional knowledge information corresponding to its profession.

The virtual image's field of knowledge may include sports, traditional Chinese studies, entertainment, news, shopping, beauty, etc. Different professions may be associated with different professional knowledge information.

As an example, if the virtual image's profession is a lawyer, the associated professional knowledge information will be related to law. If the virtual image's profession is a doctor, the associated professional knowledge information will be related to medicine.

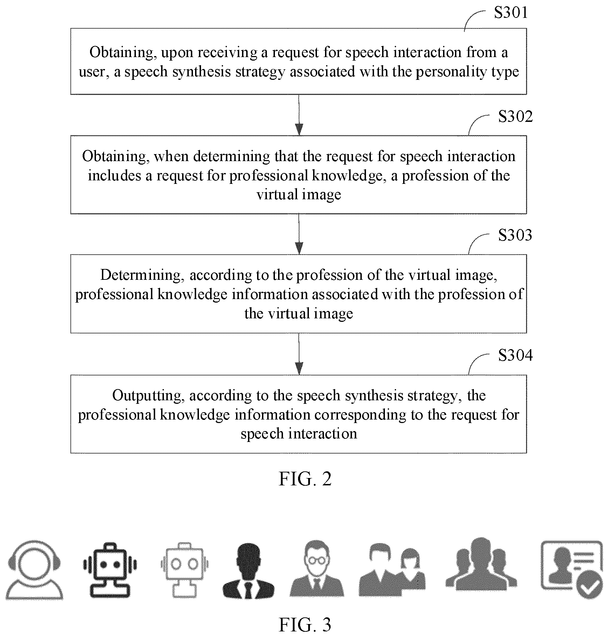

As shown in FIG. 2, particularly, the method may also include steps S301 to S304.

In step S301, the speech synthesis strategy associated with the personality type is obtained after a request for speech interaction from the user is received.

In step S302, the profession of the virtual image is obtained when it is determined that the request for speech interaction includes a request for professional knowledge.

The request for professional knowledge may be determined according to keywords in the request for speech interaction. If the request for speech interaction includes preset professional knowledge keywords, it is determined to be the request for professional knowledge; if the request for speech interaction does not include the preset professional knowledge keywords, it is determined not to be the request for professional knowledge. For example, if the request for speech interaction includes a keyword such as "lawyer" or "doctor", it may be determined as the request for professional knowledge.

In step S303, the professional knowledge information associated with the profession of the virtual image is determined according to the profession of the virtual image.

In step S304, the professional knowledge information corresponding to the request for speech interaction is output according to the speech synthesis strategy.

During an interaction of the virtual image with the user, the virtual image, after receiving the request for speech interaction, analyzes the request for speech interaction and determines the response information corresponding to the request for speech interaction. If the request for speech interaction includes a query for professional knowledge, the response information is the professional knowledge information, the professional knowledge information corresponding to the request for speech interaction is output by the virtual image, and the output tone and timbre of the professional knowledge information corresponding to the request for speech interaction are determined according to the speech synthesis strategy. If the request for speech interaction does not include the request for professional knowledge, then the response information corresponding to the request for speech interaction is queried from the corpus.

For example, if the user's voice input is "Is event A a criminal case?" the response information should be searched within the legal professional knowledge information to determine the corresponding response information.

The virtual image's professional knowledge information is determined based on the profession of the virtual image, thereby the configuration items for the user to configure the virtual image in the vehicle is reduced, and the configuration efficiency is improved.

In one possible implementation, before step S102, the method may also include a step of:
generating the virtual image.

Configurable information for the virtual image may include an appearance, a profession, a service content, and a personality type. The configuration information of the virtual image may be selected by the user on a configuration platform. The configuration platform may be an APP (application) on a mobile terminal or may be a vehicle control host in the vehicle.

Particularly, the process of generating the virtual image includes that:

An appearance of the virtual image is generated according to appearance information selected and/or entered by the user.

The appearance information includes at least one of age, gender, avatar, body type, nationality, and language. The virtual image's age may be 20-30 years old, 31-35 years old, 36-40 years old, etc. When setting the virtual image, the user may select one of these age ranges.

Language information may include Chinese, English, Japanese, etc. When setting the virtual image, the user may select one of these languages. The appearance information may also include the avatar and nationality of the virtual image. For example, the avatar may be as shown in FIG. 3. The body type of the virtual image may be thin, medium, or obese.

The profession of the virtual image is configured based on the profession information selected and/or entered by the user.

The profession information includes one of teacher, engineer, CEO, actor, doctor, and police officer.

The personality type of the virtual image is configured according to the personality information selected and/or entered by the user, and the associated speech synthesis strategy is automatically determined according to the personality type.

The speech synthesis strategy includes tone, timbre, and corpus, and the personality type includes one of gentle, active, cute, rational, enthusiastic, talkative, loyal, frugal, aggressive, and hedonistic.

The service content of the virtual image is configured according to the service information selected and/or entered by the user.

The service content includes at least one of a chat service, a perception service, an ecosystem service, a vehicle control service, and a vehicle diagnostic service. The perception service includes voice perception, visual perception, global perception, all-staff perception, and all-time perception. The ecosystem service provides data, files, collaboration, etc., for electronic products (such as audio-video devices, recorders, electronic controllers, etc.) in the vehicle. The vehicle diagnostic service is used to determine whether the vehicle is functioning properly, such as the fuel level in the tank, whether the seatbelt is fastened, whether the doors are closed properly, etc.

Particularly, the user may activate different services by touching different control buttons on a vehicle display screen. For example, upon receiving the user's operation on a first control button, the chat service is activated.

Additionally, if multiple virtual images are requested by the user in one vehicle, the multiple virtual images may have different configuration information. For example, the personality types of the multiple virtual images may be different.

After the virtual images are configured, the user may activate the virtual image when needed, such as the user may use a virtual control button to turn the virtual image on or off.

A configuration interface of the virtual image is provided for the user, which allows the user to configure the virtual image's information according to their preferences and needs, thereby the needs of different users can be met.

In one possible implementation, a method for configuring the virtual image's personality type may also include the following:

A first image is captured through a camera installed in a vehicle, where the first image includes a user's appearance feature, such as a facial feature, a face shape, clothing, expression, etc.

The user's appearance feature included in the first image is analyzed to determine the user's appearance type, where the type of appearance may include rugged, petite, cute, intellectual, etc.

Candidate personality types associated with the user's appearance type are identified, where the candidate personality types associated with the appearance type are referred to as first candidate personality types.

If there is one candidate personality type associated with the user's appearance type, the virtual image's personality type is configured using that candidate personality type.

If there are at least two candidate personality types associated with the user's appearance type, all the candidate personality types associated with the user's appearance type are displayed and the user is prompted to select one candidate personality type.

If a user-selected candidate personality type is received within a preset time after displaying the candidate personality types, then the virtual image's personality type is configured according to the user-selected candidate personality type.

If no user-selected candidate personality type is received within the preset time after displaying the candidate personality types, other personality types are displayed. The other personality types are personality types other than the candidate personality types associated with the user's appearance type. If a user-selected other personality type is received, the virtual image's personality type is configured using the user-selected other personality type.

Optionally, after one candidate personality type is determined, this candidate personality type is displayed. If a first command indicating the user's confirmation to use this candidate personality type is received within a preset time after displaying this candidate personality type, then the virtual image's personality type is configured according to this candidate personality type. If the first command is not received within the preset time after displaying this candidate personality type, other personality types are displayed. If the user-selected other personality type is received, then the virtual image's personality type is configured using the user-selected other personality type.

In one possible implementation, the method for configuring the virtual image's personality type may also include the following:

Driving behavior information of the user each time the user drives the vehicle within a preset time period before the current time is obtained. The driving behavior information includes a driving route, a throttle pressure, a throttle opening, an average speed of each drive, etc. The driving route includes highway, no highway, the number of congested sections, etc. Based on the user's driving behavior information, the user's common driving mode is determined, the common driving mode refers to a driving mode used most frequently within a predetermined driving period (such as 7 or 10 days).

Candidate personality types associated with the common driving mode are determined, where the candidate personality types associated with the common driving mode are referred to as second candidate personality types.

If there is one candidate personality type associated with the common driving mode, the virtual image's personality type is configured using that candidate personality type.

If there are at least two candidate personality types associated with the common driving mode, all the candidate personality types associated with the driving mode are displayed and the user is prompted to select one candidate personality type.

If a user-selected candidate personality type is received within a preset time after displaying the candidate personality types, the virtual image's personality type is configured according to the user-selected candidate personality type.

If no user-selected candidate personality type is received within the preset time after displaying the candidate personality types, other personality types are displayed. The other personality types are personality types other than the candidate personality types associated with the driving mode. If a user-selected other personality type is received, the virtual image's personality type is configured using the user-selected other personality type.

In one possible implementation, the method for configuring the virtual image's personality type may also include the following:

A first image is captured through a camera installed in a vehicle, where the first image includes a user's appearance feature.

The user's appearance features included in the first image is analyzed to determine the user's appearance type.

The user's driving behavior information each time the user drives the vehicle within a preset time period before the current time is obtained.

Based on the user's appearance type and the determined driving behavior information, a candidate personality type suitable for the user is determined and the virtual image's personality type is configured using this candidate personality type. The candidate personality type suitable for the user is referred to as a third candidate personality type.

Alternatively, based on the user's appearance type and the determined driving behavior information, a candidate personality type suitable for the user is determined and displayed. If a user-selected candidate personality type is received within a preset time after displaying this candidate personality type, the virtual image's personality type is configured according to the user-selected candidate personality type.

If no user-selected candidate personality type is received within the preset time after displaying this candidate personality type, other personality types are displayed. The other personality types are personality types other than the determined candidate personality type suitable for the user. If a user-selected other personality type is received, then the virtual image's personality type is configured using the user-selected other personality type.

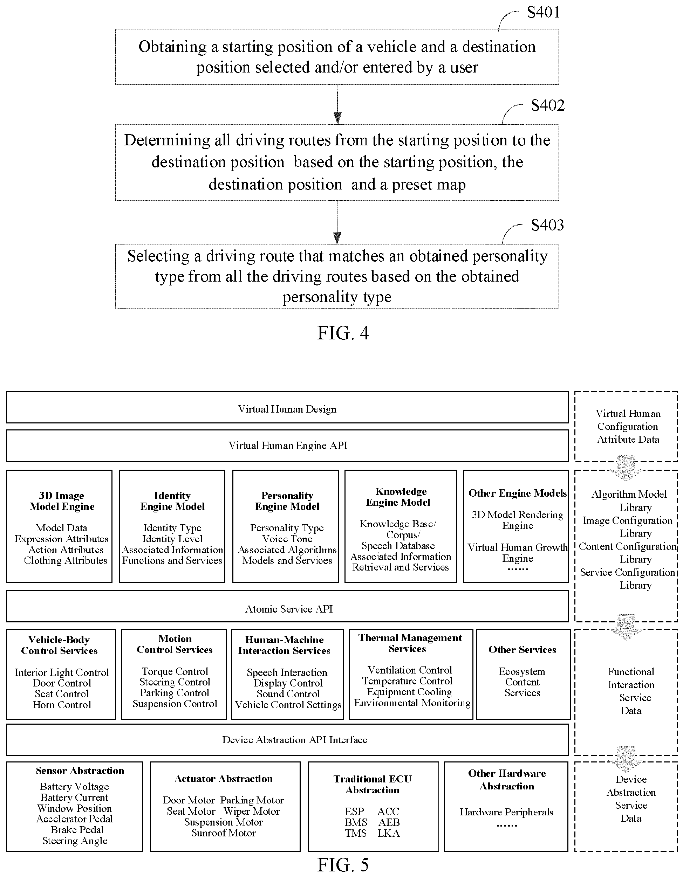

As shown in FIG. 4, in one possible implementation, the vehicle control services include the determination of the driving route. The method may also include steps S401 to S403.

In step S401, a starting position of the vehicle and a destination position selected or entered by the user are obtained.

The starting position and the destination position may be set by the user through ta navigation device in the vehicle when the vehicle is used by the user.

Additionally, the starting position may also be detected and obtained through a positioning device in the vehicle.

S402: all driving routes from the starting position to the destination position are determined based on the starting position, the destination position, and a preset map.

Multiple routes may be provided to travel from the starting position to the destination position, such as using highways or not using highways, etc. Thus, it may be necessary to determine all driving routes from the starting position to the destination position according to the starting position and the destination position.

Particularly, various driving routes from the starting position to the destination position may also be determined based on the obtained route requirements entered by the user.

For example, if the user's route requirement is to avoid highways, the driving routes containing highways need to be excluded when determining the driving routes from the starting position to the destination position.

In step S403: the driving route that matches the obtained personality type is selected from all the determined driving routes based on the obtained personality type.

After determining the various driving routes, a final driving route required by the user is determined according to the driving mode determined according to the personality type. The final determined driving route required by the user is the one that matches the personality type, and may also be referred to as a target driving route.

Particularly, an implementation process of step S403 may include steps S4031 to S4033.

In step S4031, when the driving mode determined according to the personality type includes an economic mode, a cost incurred by each driving route is determined based on traffic condition information on each driving route, and the driving route with the lowest cost is selected as the driving route that matches the personality type.

The cost includes at least one of a fuel consumption and a toll, where the toll includes highway toll, bridge toll, etc.

If the driving mode is the economic mode, indicating that the user's requirement is low fuel consumption, thus the route with the least fuel consumption among various driving routes needs to be selected.

Particularly, the traffic condition information may be a sparsity of vehicles, a number of traffic lights, speed limit values in restricted areas, locations of highway toll stations, etc., on the driving route. The consumption costs on various driving routes can be calculated according to the driving route and traffic condition information.

In step S4032, when the driving mode determined according to the personality type is a sport mode, driving time required for each driving route is determined based on the traffic condition information of each driving route, and the driving route with the shortest driving time is selected as the driving route that matches the personality type.

If the driving mode is the sport mode, indicating that the user's requirement is to reach the destination quickly, then the driving route with the shortest driving time among all the driving routes needs to be found.

Particularly, the method of determining the driving time is similar to the method of determining estimated fuel consumption, which will not be elaborated here.

In step S4033, when the driving mode determined according to the personality type is a comfort mode, the estimated number of traffic jams and/or the estimated time of traffic jams on each driving route is determined based on the traffic condition information of each driving route, and the driving route that matches the personality type is determined based on all the estimated number of traffic jams and/or all the estimated time of traffic jams.

If the driving mode is the comfort mode, indicating that the user's requirement is to drive the vehicle as comfortably as possible, thus, it is needed to determine the estimated number of traffic jams and/or the estimated time of traffic jams on each driving route.

Particularly, the method of determining the estimated number of traffic jams and the estimated time of traffic jams is similar to the method of determining the estimated fuel consumption, which will not be elaborated here.

Particularly, the driving route corresponding to the smallest number of estimated traffic jams will be selected as the target driving route if it is the estimated number of traffic jams that is determined according to the traffic condition information.

The driving route corresponding to the shortest estimated time of traffic jams will be selected as the target driving route if it is the estimated time of traffic jams that is determined according to the traffic condition information.

If both the estimated time of traffic jams and the estimated number of traffic jams are determined according to the traffic condition information, a traffic jam parameter will be calculated according to a preset weight. The driving route corresponding to the smallest traffic jam parameter will be selected as the target driving route.

Particularly, a first value is obtained by calculating the product of the estimated number of traffic jams and a first weight. A second value is obtained by calculating the product of the estimated time of traffic jams and a second weight. The traffic jam parameter is obtained by calculating the sum of the first value and the second value.

A route selection strategy may be determined after the driving mode is determined. That is, the route selection strategy can be determined upon determining the virtual image's personality type, thus the number of configuration items needed when configuring the vehicle is reduced and the vehicle configuration time is improved. The route selection strategy includes a route calculation model which includes models for calculating the driving time, fuel consumption, estimated number of traffic jams, and estimated time of traffic jams.

As shown in FIG. 5, in one possible implementation, multiple application programming interfaces (Application Programming Interface, API) are set up in the vehicle. Particularly, multiple APIs are provided to collectively define a virtual digital human. These multiple APIs may include a virtual human engine API, an atomic service API, and a device abstraction API interface.

The virtual human engine API may include a knowledge engine model, a personality engine model, an identity engine model, an identity engine model, a 3D image model engine, and other engine models. The 3D image model engine may include facial expression attributes, action attributes, clothing attributes and the like. The identity engine model may include an identity type, an identity level and the like. The personality engine model may include a personality type, timbre, tone and the like. Other engine models may include a 3D model rendering engine, a virtual human growth engine, etc.

The atomic service API may provide various functional interaction service data. The atomic service API may include human-machine interaction services, vehicle-body control services, thermal management services, motion control services, and other services. The body control services may provide data including interior light control, door control, seat control, horn control, etc. The motion control services may provide data including torque control, steering control, parking control, suspension control, etc. The human-machine interaction services may provide data including speech interaction, display control, sound control, vehicle control settings, etc. The thermal management services may provide data including ventilation control, temperature control, equipment cooling, environmental monitoring, etc. Other services may include ecological content services, anthropomorphic chat services, vehicle diagnostic services, information consulting services, etc.

The setup abstraction API interface may provide various device abstraction service data, such as a sensor abstraction interface, an actuator abstraction interface, a traditional electronic control unit (Electronic Control Unit, ECU) abstraction interface, and other hardware abstraction interfaces. The sensor abstraction interface may provide data including a battery voltage, a battery current, a window position, an accelerator pedal position, a brake pedal position, a steering wheel angle, etc. The actuator abstraction interface may provide data including a door motor, a parking motor, a seat motor, a wiper motor, a suspension motor, a sunroof motor, etc. The traditional ECU abstraction interface may provide data including an adaptive cruise control (Adaptive Cruise Control, ACC) system, an electronic stability program (Electronic Stability Program, ESP) system, a battery management system (Battery Management System, BMS), an autonomous emergency braking (Autonomous Emergency Braking, AEB) system, a transportation management system (Transportation Management System, TMS), a lane keeping assist (Lane Keeping Assist, LKA), etc.

It should be understood that the numbering of the steps in the above description does not imply the order of execution. The sequence of processes should be determined based on their functions and internal logic, and should not impose any limitations on the implementation of the examples described.

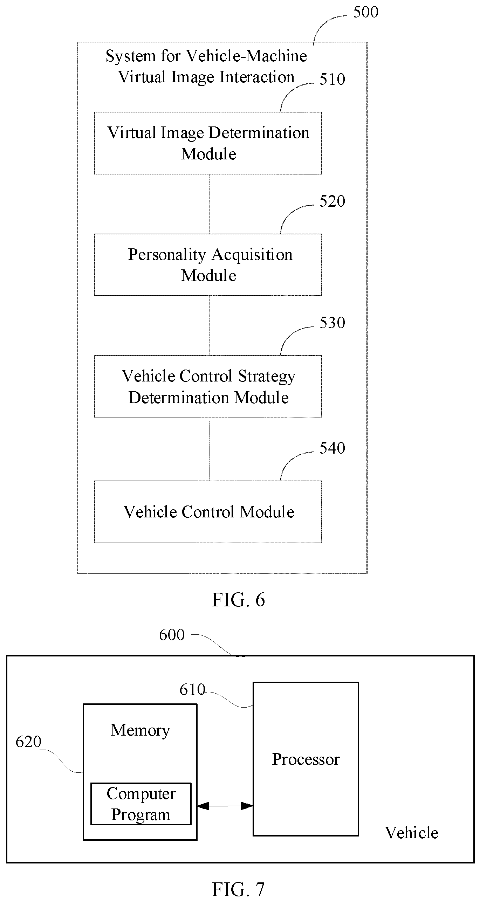

Corresponding to the method for vehicle-machine virtual image interaction described above, FIG. 6 shows a block diagram of a system for vehicle-machine virtual image interaction provided by the invention. For ease of explanation, only the parts related to the invention are shown.

Referring to FIG. 6, the system 500 may include: a virtual image determination module 510, a personality acquisition module 520, a vehicle control strategy determination module 530, and a vehicle control module 540.

The virtual image determination module 510 is configured to identify a virtual image that is preset in a vehicle machine and provides vehicle control services when a vehicle is started or in operation, where the vehicle control services include a determination of a vehicle control strategy.

The personality acquisition module 520 is configured to obtain a personality type of the virtual image;

The vehicle control strategy determination module 530 is configured to determine, according to the obtained personality type, the vehicle control strategy associated with the obtained personality type, where the vehicle control strategy includes a driving mode and/or a vehicle control parameter.

The vehicle control module 540 is configured to control the vehicle to operate based on the determined vehicle control strategy.

In one possible implementation, the vehicle 500 may also include: a speech synthesis strategy acquisition module, a profession information acquisition module, a professional knowledge determination module and an information output module.

The speech synthesis strategy acquisition module is configured to obtain a speech synthesis strategy associated with the personality type upon receiving a user's request for speech interaction, where the speech synthesis strategy includes at least one of timbre, corpus and tone.

The profession information acquisition module is configured to obtain a profession of the virtual image when it is determined that the request for speech interaction includes a request for professional knowledge.

The professional knowledge determination module is configured to determine professional knowledge information associated with the virtual image's profession according to the profession of the virtual image.

The information output module is configured to output the professional knowledge information corresponding to the request for speech interaction according to the speech synthesis strategy.

In one possible implementation, the personality acquisition module 520 may also be connected to a virtual image generation module.

The virtual image generation module is configured to generate the virtual image.

Herein, the generation of the virtual image includes steps of:
generating an appearance of the virtual image according to appearance information selected and/or entered by the user, the appearance information includes at least one of age, gender, avatar, body type, nationality, and language.
configuring the profession of the virtual image according to profession information selected and/or entered by the user, the profession information includes one of teacher, engineer, CEO, actor, doctor, and police officer;
configuring the personality type of the virtual image according to personality information selected and/or entered by the user, and automatically determining the associated speech synthesis strategy according to the personality type, where the speech synthesis strategy includes tone, timbre and corpus, and the personality type includes one of gentle, active, cute, rational, enthusiastic, talkative, loyal, frugal, aggressive, and hedonistic; and
configuring a service content of the virtual image based on service information selected and/or entered by the user, the service content includes at least one of a chat service, a perception service, an ecosystem service, a vehicle control service, and a vehicle diagnostic service.

In one possible implementation, the vehicle control services include a determination of a driving route. The vehicle 500 may also include: a position determination module, a route generation module and a route determination module.

The position determination module is configured to obtain a starting position of the vehicle and a destination position selected and/or entered by the user.

The route generation module is configured to determine all driving routes from the starting position to the destination position based on the starting position, the destination position and a preset map.

The route determination module is configured to select, from all the determined routes, a driving route that matches the personality type based on the obtained personality type.

**In** one possible implementation, particularly, the route determination module may also be configured to:
determine a cost associated with each driving route based on vehicle condition information when the driving mode determined according to the personality type is an economic mode, and select a driving route having the lowest cost as the driving route that matches the personality type, where the cost includes at least one of a fuel consumption cost and a highway fee.

**In** one possible implementation, particularly, the route determination module may also be configured to:
determine driving time required for each driving route based on the vehicle condition information when the driving mode determined according to the personality type is a sport mode, and select a driving route having the shortest driving time as the driving route that matches the personality type.

**In** one possible implementation, particularly, the route determination module may also be configured to:
determine the estimated number of traffic jams and/or estimated time of traffic jams for each driving route based on the vehicle condition information when the driving mode determined according to the personality type includes a comfort mode, and select the driving route that matches the personality type based on all estimated numbers of traffic jams and/or estimated time of the traffic jams.

It should be noted that the information exchange and execution processes between the aforementioned devices/modules are based on the same concept as the method of the invention. The specific functions and technical effects are described in the method and thus are not repeated here.

It may be clearly understood by persons skilled in the art that, for convenience and simplicity of description, only the above functional units and modules are discussed as examples. In practical applications, the functions described may be allocated to different functional units or modules as needed. That is, the internal structure of the device may be divided into different functional units or modules to complete all or part of the described functions. The functional units or modules may be integrated into a single processing unit, or may be presented as separate physical units, or two or more units may be integrated into one unit. The integrated units may be implemented in the form of hardware or in the form of software functional unit. Additionally, the specific names of the functional units or modules are for convenience of distinction and are not intended to limit the protection scope of the invention. The specific working processes of the units or modules in the system can be referenced from the corresponding processes in the method implementation examples and are not repeated here.

The invention also provides a vehicle. Referring to FIG. 7, the vehicle 600 may include: at least one processor 610, a memory 620, and a computer program stored in the memory 620 and executable by the at least one processor 610. The processor 610 is configured, when executing the computer program, to implement the steps of any of the method described above, such as steps S101 to S104 shown in FIG. 1. Alternatively, the processor 610 is configured, when executing the computer program, to achieve the functionalities of the modules/units in the device described above, such as the functionalities of modules 510 to 540 shown in FIG. 6.

As an example, the computer program may be divided into one or more modules/units. The one or more modules/units are stored in memory 620 and executed by processor 610 to complete the invention. The one or more modules/units may be a series of program segments capable of performing specific functions, and these segments describe the execution process of the computer program in the vehicle 600.

It will be understood by persons skilled in the art that FIG. 7 is merely an example of a vehicle and does not constitute a restriction on the vehicle. The vehicle may include more or fewer components than those illustrated, or different components, such as input/output devices, network access devices, buses, etc.

The processor 610 may be a central processing unit (Central Processing Unit, CPU), or may be other general-purpose processors, digital signal processors (Digital Signal Processor, DSP), application specific integrated circuits (Application Specific Integrated Circuit, ASIC), field-programmable gate arrays (Field-Programmable Gate Array, FPGA), or other programmable logic devices, discrete gates or transistor logic devices, or discrete hardware components. General-purpose processors may be microprocessors or any conventional processors.

The memory 620 may be an internal storage unit of the vehicle or an external storage device of the vehicle, such as a plug-in hard drive, a smart media card (Smart Media Card, SMC), a secure digital (Secure Digital, SD) card, a flash card (Flash Card), etc. The memory 620 is configured to store the computer program and other programs and data required by the vehicle. The memory 620 may also be configured to temporarily store data that has been output or is to be output.

The bus may be an industry standard architecture (Industry Standard Architecture, ISA) bus, a peripheral component (Peripheral Component, PCI) bus, or an extended industry standard architecture (Extended Industry Standard Architecture, EISA) bus, etc. The bus may be divided into an address bus, a data bus, a control bus, etc. For ease of representation, the buses in the drawings are not limited to just one bus or one type of bus.

The method for vehicle-machine virtual image interaction provided by the invention may be applied to terminal equipment such as a computer, a tablet, a laptop, a netbook, a personal digital assistant (PDA), etc. The specific type of terminal device in the invention is not limited.

In the above, the description of each example has its own emphasis, and the parts of an example that are not detailed or documented can be referenced from the relevant descriptions of other examples.

It would be apparent to persons skilled in the art that the exemplary units and algorithm steps described in conjunction with the disclosed examples may be implemented through electronic hardware, or a combination of computer software and electronic hardware. Whether these functions are executed in hardware or software depends on the specific application and design constraints of the technical solution. Professionals may use different methods to implement the described functions for each specific application, which may be in the scope of protection defined by the claims.

It should be understood that the disclosed terminal equipment, devices, and methods may be realized in other ways. For example, the terminal equipment described above are merely illustrative, for example, the division of modules or units is just one logical functional division, and other division methods may be used in actual implementation. For example, multiple units or components may be combined or integrated into another system, or some features may be omitted or not implemented. Additionally, the coupling or direct coupling or communication connection shown or discussed may be an indirect coupling or communication connection through some interfaces, devices, or units, and may be implemented in electrical, mechanical, or other forms.

The units described as separate components may or may not be physically separated. The components shown as units may or may not be physical units, that is, these units may be located in one place or distributed across multiple network units. Depending on the actual needs, some or all of the units may be selected to achieve the objectives.

Furthermore, in the invention, the functional units may be integrated into a single processing unit or may exist physically as separate units, or two or more units can be integrated into one unit. The integrated units may be implemented in hardware or as software functional units.

The integrated units, if implemented in the form of software functional units and sold or used as standalone products, may be stored in a computer-readable storage medium. Based on this understanding, the implementation of all or part of the processes may also be achieved by instructing the relevant hardware through computer programs. The computer program may be stored in a computer-readable storage medium and, when executed by one or more processors, enables the steps of the method described above to be implemented.

The integrated units, if implemented in the form of software functional units and sold or used as standalone products, may be stored in a computer-readable storage medium. Based on this understanding, the implementation of all or part of the processes described may also be achieved by instructing the relevant hardware through computer programs. The computer program may be stored in a computer-readable storage medium and, when executed by one or more processors, enables the steps of the method described above to be implemented.

Similarly, as a computer program product, the computer program product, when running on terminal equipment, causes the terminal equipment to perform the steps of the various method.

The computer program includes a computer program code, which may be in the form of source code, object code, executable files, or some intermediate forms. The computer-readable medium may include: any entity or device capable of carrying the computer program code, a recording medium, U disk, a portable hard disk, a magnetic disk, an optical disc, a computer memory, read-only memory (ROM, Read-Only Memory), a random-access memory (RAM, Random Access Memory), an electric carrier signal, a telecommunications signal, a software distribution medium, etc.

## Claims

1. A method for vehicle-machine virtual image interaction, comprising:
(S101) identifying a virtual image that is preset in a vehicle machine and provides vehicle control services when a vehicle is started or in operation, wherein the vehicle control services comprise a determination of a vehicle control strategy;
(S102) obtaining a personality type of the virtual image;
(S103) determining, according to the obtained personality type, the vehicle control strategy associated with the obtained personality type, wherein the vehicle control strategy comprises a driving mode and/or a vehicle control parameter; and
(S104) controlling the vehicle to operate based on the determined vehicle control strategy.

2. The method for vehicle-machine virtual image interaction according to claim 1, wherein, the method further comprises:
(S301) obtaining, upon receiving a request for speech interaction from a user, a speech synthesis strategy associated with the personality type, wherein the speech synthesis strategy comprises at least one of timbre, corpus, and tone;
(S302) obtaining, when it is determined that the request for speech interaction comprises a request for professional knowledge, a profession of the virtual image;
(S303) determining, according to the profession of the virtual image, professional knowledge information associated with the profession of the virtual image; and
(S304) outputting, according to the speech synthesis strategy, the professional knowledge information corresponding to the request for speech interaction.

3. The method for vehicle-machine virtual image interaction according to any one of claims 1 to 2, wherein, before said (S102) obtaining the personality type of the virtual image, the method further comprises:
generating the virtual image.

4. The method for vehicle-machine virtual image interaction according to claim 3, wherein said generating the virtual image comprises:
generating an appearance of the virtual image according to appearance information selected and/or entered by a user;
configuring a profession of the virtual image according to profession information selected and/or entered by the user;
configuring the personality type of the virtual image according to personality information selected and/or entered by the user, and automatically determining, according to the personality type, the speech synthesis strategy associated with the personality type, wherein the speech synthesis strategy comprises tone, timbre, and corpus; and
configuring a service content of the virtual image according to service information selected and/or entered by the user.

5. The method for vehicle-machine virtual image interaction according to claim 3, wherein, the virtual image comprises the personality type of the virtual image, and said generating the virtual image comprises:
capturing a first image through a camera installed in the vehicle, wherein the first image comprises appearance features of a user;
analyzing the appearance features comprised in the first image to determine an appearance type of the user;
identifying a first candidate personality type associated with the appearance type of the user; and
configuring the personality type of the virtual image using the first candidate personality type if there is one first candidate personality type associated with the appearance type of the user.

6. The method for vehicle-machine virtual image interaction according to claim 5, wherein, after said identifying the first candidate personality type associated with the appearance type of the user, the method further comprises:
displaying all first candidate personality types associated with the appearance type of the user if there are at least two first candidate personality types associated with the appearance type of the user;
receiving a user-selected first candidate personality type within a preset time after displaying the first candidate personality types; and
configuring the personality type of the virtual image according to the user-selected first candidate personality type.

7. The method for vehicle-machine virtual image interaction according to claim 6, wherein, after said displaying all the first candidate personality types associated with the appearance type of the user, the method further comprises:
displaying other personality types if no user-selected first candidate personality type is received within a preset time after displaying the first candidate personality types, wherein the other personality types are personality types other than all the first candidate personality types associated with the appearance type of the user; and
configuring, if a user-selected other personality type is received, the personality type of the virtual image using the user-selected other personality type.

8. The method for vehicle-machine virtual image interaction according to claim 3, wherein the virtual image comprises the personality type of the virtual image, and said generating the virtual image comprises:
obtaining driving behavior information of a user each time the user drives the vehicle within a preset time period before a current time, wherein the driving behavior information comprises a driving route and a vehicle driving parameter;
determining a common driving mode of the user based on the driving behavior information of the user;
determining a second candidate personality type associated with the common driving mode; and
configuring the personality type of the virtual image using the second candidate personality type if there is only one second candidate personality type associated with the common driving mode.

9. The method for vehicle-machine virtual image interaction according to claim 8, wherein, after said determining the candidate personality type associated with the common driving mode, the method further comprises:
displaying all second candidate personality types associated with the driving mode if there are at least two second candidate personality types associated with the common driving mode; and
receiving a user-selected second candidate personality type within a preset time after displaying all the second candidate personality types, and configuring the personality type of the virtual image according to the user-selected second candidate personality type.

10. The method for vehicle-machine virtual image interaction according to claim 9, wherein, after said displaying all the candidate personality types associated with the driving mode, the method further comprises:
displaying other personality types if no user-selected second candidate personality type is received within the preset time after displaying all the second candidate personality types, wherein the other personality types are personality types other than the candidate personality types associated with the driving mode; and
configuring, if a user-selected other personality type is received, the personality type of the virtual image using the user-selected other personality type.

11. The method for vehicle-machine virtual image interaction according to claim 3, wherein the virtual image comprises the personality type of the virtual image, and said generating the virtual image comprises:
capturing a first image through a camera installed in the vehicle, wherein the first image comprises appearance features of a user;
analyzing the appearance features of the user comprised in the first image to determine an appearance type of the user;
obtaining driving behavior information of the user each time the user drives the vehicle within a preset time period before a current time;
determining a third candidate personality type suitable for the user based on the appearance type of the user and determined driving behavior information; and
configuring the personality type of the virtual image based on the determined third candidate personality type.

12. The method for vehicle-machine virtual image interaction according to any one of claims 1 to 11, wherein the vehicle control services comprise a determination of a driving route, and the method further comprises:
(S401) obtaining a starting position of the vehicle and a destination position selected and/or entered by a user;
(S402) determining all driving routes from the starting position to the destination position based on the starting position, the destination position and a preset map; and
(S403) selecting a driving route that matches the obtained personality type from all the driving routes based on the obtained personality type.

13. The method for vehicle-machine virtual image interaction according to claim 12, wherein, said selecting the driving route that matches the obtained personality type from all the driving routes based on the obtained personality type comprises:
(S4031) determining a cost incurred by each driving route based on vehicle condition information on each driving route when the driving mode determined according to the personality type is an economic mode, and selecting a driving route having a lowest cost as the driving route that matches the personality type, wherein the cost comprises at least one of a fuel consumption cost and a toll fee; or
(S4032) determining driving time required for each driving route based on vehicle condition information on each driving route when the driving mode determined according to the personality type is a sport mode, and selecting a driving route having a shortest driving time as the driving route that matches the personality type; or
(S4033) determining an estimated number of traffic jams and/or estimated time of traffic jams for each driving route based on vehicle condition information on each driving route when the driving mode determined according to the personality type comprises a comfort mode, and selecting a driving route that matches the personality type based on all the estimated numbers of traffic jams and/or estimated time of traffic jams.

14. A vehicle (600), comprising a memory (620), a processor (610), and a computer program stored in the memory and executable by the processor (610), wherein the processor (610) is, when executing the computer program, caused to execute the method for vehicle-machine virtual image interaction according to any one of claims 1 to 13.

15. A computer-readable storage medium in which a computer program is stored, wherein, the computer program, when executed by a processor, causes the processor to execute the method for vehicle-machine virtual image interaction according to any one of claims 1 to 13 to be implemented.

## Patentansprüche

1. Verfahren zur Interaktion eines virtuellen Abbilds eines Fahrzeugcomputers, aufweisend:
(S101) Identifizieren eines virtuellen Abbilds, das in einem Fahrzeugcomputer voreingestellt ist und Fahrzeugsteuerungsdienste bereitstellt, wenn ein Fahrzeug gestartet wird oder in Betrieb ist, wobei die Fahrzeugsteuerungsdienste eine Bestimmung einer Fahrzeugsteuerungsstrategie aufweisen;
(S102) Erhalten eines Persönlichkeitstyps des virtuellen Abbilds;
(S103) Bestimmen, gemäß dem erhaltenen Persönlichkeitstyp, der Fahrzeugsteuerungsstrategie, die dem erhaltenen Persönlichkeitstyp zugeordnet ist, wobei die Fahrzeugsteuerungsstrategie einen Fahrmodus und/oder einen Fahrzeugsteuerungsparameter aufweist; und
(S104) Steuern des Fahrzeugs zum Betrieb auf Grundlage der bestimmten Fahrzeugsteuerungsstrategie.

2. Verfahren zur Interaktion eines virtuellen Abbilds eines Fahrzeugcomputers nach Anspruch 1, wobei das Verfahren ferner aufweist:
(S301) Erhalten, bei Empfang einer Sprachinteraktionsanforderung von einem Nutzer, einer Sprachsynthesestrategie, die dem Persönlichkeitstyp zugeordnet ist, wobei die Sprachsynthesestrategie mindestens eines von Klangfarbe, Korpus und Tonfall aufweist;
(S302) Erhalten, wenn bestimmt wird, dass die Sprachinteraktionsanforderung eine Fachwissensanforderung aufweist, eines Berufs des virtuellen Abbilds;
(S303) Bestimmen, gemäß dem Beruf des virtuellen Abbilds, von Fachwissensinformationen, die dem Beruf des virtuellen Abbilds zugeordnet sind; und
(S304) Ausgeben, gemäß der Sprachsynthesestrategie, der Fachwissensinformationen, die der Sprachinteraktionsanforderung entsprechen.

3. Verfahren zur Interaktion eines virtuellen Abbilds eines Fahrzeugcomputers nach einem der Ansprüche 1 bis 2, wobei das Verfahren vor dem genannten (S102) Erhalten des Persönlichkeitstyps des virtuellen Abbilds ferner aufweist:
Erzeugen des virtuellen Abbilds.

4. Verfahren zur Interaktion eines virtuellen Abbilds eines Fahrzeugcomputers nach Anspruch 3, wobei das genannte Erzeugen des virtuellen Abbilds aufweist:
Erzeugen eines Erscheinungsbilds des virtuellen Abbilds gemäß Erscheinungsbildinformationen, die von einem Nutzer ausgewählt und/oder eingegeben werden;
Konfigurieren eines Berufs des virtuellen Abbilds gemäß Berufsinformationen, die von dem Nutzer ausgewählt und/oder eingegeben werden;
Konfigurieren des Persönlichkeitstyps des virtuellen Abbilds gemäß Persönlichkeitsinformationen, die von dem Nutzer ausgewählt und/oder eingegeben werden, und automatisches Bestimmen, gemäß dem Persönlichkeitstyp, der Sprachsynthesestrategie, die dem Persönlichkeitstyp zugeordnet ist, wobei die Sprachsynthesestrategie Tonfall, Klangfarbe und Korpus aufweist; und
Konfigurieren eines Dienstinhalts des virtuellen Abbilds gemäß Dienstinformationen, die von dem Nutzer ausgewählt und/oder eingegeben werden.

5. Verfahren zur Interaktion eines virtuellen Abbilds eines Fahrzeugcomputers nach Anspruch 3, wobei das virtuelle Abbild den Persönlichkeitstyp des virtuellen Abbilds aufweist und das genannte Erzeugen des virtuellen Abbilds aufweist:
Erfassen eines ersten Bilds durch eine in dem Fahrzeug installierte Kamera, wobei das erste Bild Erscheinungsbildmerkmale eines Nutzers aufweist;
Analysieren der Erscheinungsbildmerkmale, die das erste Bild aufweist, um einen Erscheinungsbildtyp des Nutzers zu bestimmen;
Identifizieren eines ersten Kandidatenpersönlichkeitstyps, der dem Erscheinungsbildtyp des Nutzers zugeordnet ist; und
Konfigurieren des Persönlichkeitstyps des virtuellen Abbilds unter Verwendung des ersten Kandidatenpersönlichkeitstyps, falls es einen ersten Kandidatenpersönlichkeitstyp gibt, der dem Erscheinungsbildtyp des Nutzers zugeordnet ist.

6. Verfahren zur Interaktion eines virtuellen Abbilds eines Fahrzeugcomputers nach Anspruch 5, wobei das Verfahren nach dem genannten Identifizieren des ersten Kandidatenpersönlichkeitstyps, der dem Erscheinungsbildtyp des Nutzers zugeordnet ist, ferner aufweist:
Anzeigen aller ersten Kandidatenpersönlichkeitstypen, die dem Erscheinungsbildtyp des Nutzers zugeordnet sind, falls es mindestens zwei erste Kandidatenpersönlichkeitstypen gibt, die dem Erscheinungsbildtyp des Nutzers zugeordnet sind;
Empfangen eines von dem Nutzer ausgewählten ersten Kandidatenpersönlichkeitstyps innerhalb einer voreingestellten Zeit nach dem Anzeigen der ersten Kandidatenpersönlichkeitstypen; und
Konfigurieren des Persönlichkeitstyps des virtuellen Abbilds gemäß dem von dem Nutzer ausgewählten ersten Kandidatenpersönlichkeitstyp.

7. Verfahren zur Interaktion eines virtuellen Abbilds eines Fahrzeugcomputers nach Anspruch 6, wobei das Verfahren nach dem genannten Anzeigen aller ersten Kandidatenpersönlichkeitstypen, die dem Erscheinungsbildtyp des Nutzers zugeordnet sind, ferner aufweist:
Anzeigen anderer Persönlichkeitstypen, falls innerhalb einer voreingestellten Zeit nach dem Anzeigen der ersten Kandidatenpersönlichkeitstypen kein von dem Nutzer ausgewählter erster Kandidatenpersönlichkeitstyp empfangen wird, wobei die anderen Persönlichkeitstypen Persönlichkeitstypen sind, die von allen ersten Kandidatenpersönlichkeitstypen, die dem Erscheinungsbildtyp des Nutzers zugeordnet sind, verschieden sind; und
Konfigurieren, falls ein von dem Nutzer ausgewählter anderer Persönlichkeitstyp empfangen wird, des Persönlichkeitstyps des virtuellen Abbilds unter Verwendung des von dem Nutzer ausgewählten anderen Persönlichkeitstyps.

8. Verfahren zur Interaktion eines virtuellen Abbilds eines Fahrzeugcomputers nach Anspruch 3, wobei das virtuelle Abbild den Persönlichkeitstyp des virtuellen Abbilds aufweist und das genannte Erzeugen des virtuellen Abbilds aufweist:
Erhalten von Fahrverhaltensinformationen eines Nutzers jedes Mal, wenn der Nutzer das Fahrzeug innerhalb eines voreingestellten Zeitraums vor einem aktuellen Zeitpunkt fährt, wobei die Fahrverhaltensinformationen eine Fahrtroute und einen Fahrzeugfahrparameter aufweisen;
Bestimmen eines üblichen Fahrmodus des Nutzers auf Grundlage der Fahrverhaltensinformationen des Nutzers;
Bestimmen eines zweiten Kandidatenpersönlichkeitstyps, der dem üblichen Fahrmodus zugeordnet ist; und
Konfigurieren des Persönlichkeitstyps des virtuellen Abbilds unter Verwendung des zweiten Kandidatenpersönlichkeitstyps, falls es nur einen zweiten Kandidatenpersönlichkeitstyp gibt, der dem üblichen Fahrmodus zugeordnet ist.

9. Verfahren zur Interaktion eines virtuellen Abbilds eines Fahrzeugcomputers nach Anspruch 8, wobei das Verfahren nach dem genannten Bestimmen des Kandidatenpersönlichkeitstyps, der dem üblichen Fahrmodus zugeordnet ist, ferner aufweist:
Anzeigen aller zweiten Kandidatenpersönlichkeitstypen, die dem Fahrmodus zugeordnet sind, falls es mindestens zwei zweite Kandidatenpersönlichkeitstypen gibt, die dem üblichen Fahrmodus zugeordnet sind; und
Empfangen eines von dem Nutzer ausgewählten zweiten Kandidatenpersönlichkeitstyps innerhalb einer voreingestellten Zeit nach dem Anzeigen aller zweiten Kandidatenpersönlichkeitstypen und Konfigurieren des Persönlichkeitstyps des virtuellen Abbilds gemäß dem von dem Nutzer ausgewählten zweiten Kandidatenpersönlichkeitstyp.

10. Verfahren zur Interaktion eines virtuellen Abbilds eines Fahrzeugcomputers nach Anspruch 9, wobei das Verfahren nach dem genannten Anzeigen aller Kandidatenpersönlichkeitstypen, die dem Fahrmodus zugeordnet sind, ferner aufweist:
Anzeigen anderer Persönlichkeitstypen, falls innerhalb der voreingestellten Zeit nach dem Anzeigen aller zweiten Kandidatenpersönlichkeitstypen kein von dem Nutzer ausgewählter zweiter Kandidatenpersönlichkeitstyp empfangen wird, wobei die anderen Persönlichkeitstypen Persönlichkeitstypen sind, die von den Kandidatenpersönlichkeitstypen, die dem Fahrmodus zugeordnet sind, verschieden sind; und
Konfigurieren, falls ein von dem Nutzer ausgewählter anderer Persönlichkeitstyp empfangen wird, des Persönlichkeitstyps des virtuellen Abbilds unter Verwendung des von dem Nutzer ausgewählten anderen Persönlichkeitstyps.

11. Verfahren zur Interaktion eines virtuellen Abbilds eines Fahrzeugcomputers nach Anspruch 3, wobei das virtuelle Abbild den Persönlichkeitstyp des virtuellen Abbilds aufweist und das genannte Erzeugen des virtuellen Abbilds aufweist:
Erfassen eines ersten Bilds durch eine in dem Fahrzeug installierte Kamera, wobei das erste Bild Erscheinungsbildmerkmale eines Nutzers aufweist;
Analysieren der Erscheinungsbildmerkmale des Nutzers, die das erste Bild aufweist, um einen Erscheinungsbildtyp des Nutzers zu bestimmen;
Erhalten von Fahrverhaltensinformationen des Nutzers jedes Mal, wenn der Nutzer das Fahrzeug innerhalb eines voreingestellten Zeitraums vor einem aktuellen Zeitpunkt fährt;
Bestimmen eines dritten Kandidatenpersönlichkeitstyps, der für den Nutzer geeignet ist, auf Grundlage des Erscheinungsbildtyps des Nutzers und bestimmter Fahrverhaltensinformationen; und
Konfigurieren des Persönlichkeitstyps des virtuellen Abbilds auf Grundlage des bestimmten dritten Kandidatenpersönlichkeitstyps.

12. Verfahren zur Interaktion eines virtuellen Abbilds eines Fahrzeugcomputers nach einem der Ansprüche 1 bis 11, wobei die Fahrzeugsteuerungsdienste eine Bestimmung einer Fahrtroute aufweisen und das Verfahren ferner aufweist:
(S401) Erhalten einer Startposition des Fahrzeugs und einer Zielposition, die von einem Nutzer ausgewählt und/oder eingegeben wird;
(S402) Bestimmen aller Fahrtrouten von der Startposition zu der Zielposition auf Grundlage der Startposition, der Zielposition und einer voreingestellten Karte; und
(S403) Auswählen einer Fahrtroute, die zu dem erhaltenen Persönlichkeitstyp passt, aus allen Fahrtrouten auf Grundlage des erhaltenen Persönlichkeitstyps.

13. Verfahren zur Interaktion eines virtuellen Abbilds eines Fahrzeugcomputers nach Anspruch 12, wobei das genannte Auswählen der Fahrtroute, die zu dem erhaltenen Persönlichkeitstyp passt, aus allen Fahrtrouten auf Grundlage des erhaltenen Persönlichkeitstyps aufweist:
(S4031) Bestimmen von Kosten, die durch jede Fahrtroute entstehen, auf Grundlage von Fahrzeugzustandsinformationen auf jeder Fahrtroute, wenn der gemäß dem Persönlichkeitstyp bestimmte Fahrmodus ein Ökonomiemodus ist, und Auswählen einer Fahrtroute, die niedrigste Kosten aufweist, als die Fahrtroute, die zu dem Persönlichkeitstyp passt, wobei die Kosten mindestens eines von Kraftstoffverbrauchskosten und einer Mautgebühr aufweisen; oder
(S4032) Bestimmen einer für jede Fahrtroute erforderlichen Fahrzeit auf Grundlage von Fahrzeugzustandsinformationen auf jeder Fahrtroute, wenn der gemäß dem Persönlichkeitstyp bestimmte Fahrmodus ein Sportmodus ist, und Auswählen einer Fahrtroute, die eine kürzeste Fahrzeit aufweist, als die Fahrtroute, die zu dem Persönlichkeitstyp passt; oder
(S4033) Bestimmen einer geschätzten Anzahl von Verkehrsstaus und/oder einer geschätzten Zeit von Verkehrsstaus für jede Fahrtroute auf Grundlage von Fahrzeugzustandsinformationen auf jeder Fahrtroute, wenn der gemäß dem Persönlichkeitstyp bestimmte Fahrmodus einen Komfortmodus aufweist, und Auswählen einer Fahrtroute, die zu dem Persönlichkeitstyp passt, auf Grundlage aller geschätzten Anzahlen von Verkehrsstaus und/oder geschätzten Zeiten von Verkehrsstaus.

14. Fahrzeug (600), aufweisend einen Speicher (620), einen Prozessor (610) und ein Computerprogramm, das in dem Speicher gespeichert und durch den Prozessor (610) ausführbar ist, wobei der Prozessor (610) bei Ausführung des Computerprogramms veranlasst wird, das Verfahren zur Interaktion eines virtuellen Abbilds eines Fahrzeugcomputers nach einem der Ansprüche 1 bis 13 auszuführen.

15. Computerlesbares Speichermedium, in dem ein Computerprogramm gespeichert ist, wobei das Computerprogramm, wenn es durch einen Prozessor ausgeführt wird, den Prozessor veranlasst, das Verfahren zur Interaktion eines virtuellen Abbilds eines Fahrzeugcomputers nach einem der Ansprüche 1 bis 13 auszuführen, damit es implementiert wird.

## Revendications

1. Procédé d'interaction avec des images virtuelles disponibles dans un système d'info-divertissement embarqué à bord d'un véhicule, comprenant les étapes consistant à :
(S101) identifier une image virtuelle qui est prédéfinie dans un système d'info-divertissement embarqué à bord d'un véhicule et qui fournit des services de commande du véhicule lorsqu'un véhicule est démarré ou lorsqu'il est en cours de fonctionnement, dans lequel les services de commande du véhicule comprennent une détermination d'une stratégie de commande du véhicule ;
(S102) obtenir un type de personnalité de l'image virtuelle ;
(S103) déterminer, en fonction du type de personnalité obtenu, la stratégie de commande du véhicule qui est associée au type de personnalité obtenu, dans lequel la stratégie de commande du véhicule comprend un mode de conduite et/ou un paramètre de commande du véhicule ; et
(S104) commander le véhicule afin qu'il fonctionne sur la base de la stratégie de commande du véhicule déterminée.

2. Procédé d'interaction avec des images virtuelles disponibles dans un système d'info-divertissement embarqué à bord d'un véhicule selon la revendication 1, dans lequel le procédé comprend en outre les étapes consistant à :
(S301) obtenir, suite à la réception d'une demande d'interaction vocale en provenance d'un utilisateur, une stratégie de synthèse vocale qui est associée au type de personnalité, dans lequel la stratégie de synthèse vocale comprend au moins un élément informationnel de stratégie parmi un timbre, un corpus et une intonation ;
(S302) obtenir, lorsqu'il est déterminé que la demande d'interaction vocale comprend une demande de connaissances professionnelles, une profession de l'image virtuelle ;
(S303) déterminer, en fonction de la profession de l'image virtuelle, des informations de connaissances professionnelles qui sont associées à la profession de l'image virtuelle ; et
(S304) émettre en sortie, en fonction de la stratégie de synthèse vocale, les informations de connaissances professionnelles qui correspondent à la demande d'interaction vocale.

3. Procédé d'interaction avec des images virtuelles disponibles dans un système d'info-divertissement embarqué à bord d'un véhicule selon l'une quelconque des revendications 1 et 2, dans lequel, avant ladite étape (S102) consistant à obtenir le type de personnalité de l'image virtuelle, le procédé comprend en outre l'étape consistant à :
générer l'image virtuelle.

4. Procédé d'interaction avec des images virtuelles disponibles dans un système d'info-divertissement embarqué à bord d'un véhicule selon la revendication 3, dans lequel ladite étape consistant à générer l'image virtuelle comprend les étapes consistant à :
générer une apparence de l'image virtuelle en fonction d'informations d'apparence qui sont sélectionnées et/ou saisies par un utilisateur ;
configurer une profession de l'image virtuelle en fonction d'informations de profession qui sont sélectionnées et/ou saisies par l'utilisateur ;
configurer le type de personnalité de l'image virtuelle en fonction d'informations de personnalité qui sont sélectionnées et/ou saisies par l'utilisateur, et déterminer automatiquement, en fonction du type de personnalité, la stratégie de synthèse vocale qui est associée au type de personnalité, dans lequel la stratégie de synthèse vocale comprend une intonation, un timbre et un corpus ; et
configurer un contenu de service(s) de l'image virtuelle en fonction d'informations de service(s) qui sont sélectionnées et/ou saisies par l'utilisateur.

5. Procédé d'interaction avec des images virtuelles disponibles dans un système d'info-divertissement embarqué à bord d'un véhicule selon la revendication 3, dans lequel l'image virtuelle comprend le type de personnalité de l'image virtuelle, et dans lequel ladite étape consistant à générer l'image virtuelle comprend les étapes consistant à :
capturer une première image au moyen d'un dispositif de prise de vues qui est installé dans le véhicule, dans lequel la première image comprend des caractéristiques d'apparence d'un utilisateur ;
analyser les caractéristiques d'apparence qui sont comprises dans la première image afin de déterminer un type d'apparence de l'utilisateur ;
identifier un premier type de personnalité candidat qui est associé au type d'apparence de l'utilisateur ; et
configurer le type de personnalité de l'image virtuelle en utilisant le premier type de personnalité candidat s'il existe un seul premier type de personnalité candidat qui est associé au type d'apparence de l'utilisateur.

6. Procédé d'interaction avec des images virtuelles disponibles dans un système d'info-divertissement embarqué à bord d'un véhicule selon la revendication 5, dans lequel, après ladite étape consistant à identifier le premier type de personnalité candidat qui est associé au type d'apparence de l'utilisateur, le procédé comprend en outre les étapes consistant à :
afficher tous les premiers types de personnalité candidats qui sont associés au type d'apparence de l'utilisateur s'il existe au moins deux premiers types de personnalité candidats qui sont associés au type d'apparence de l'utilisateur ;
recevoir un premier type de personnalité candidat sélectionné par l'utilisateur à l'intérieur d'un temps prédéfini après l'affichage des premiers types de personnalité candidats ; et
configurer le type de personnalité de l'image virtuelle en fonction du premier type de personnalité candidat sélectionné par l'utilisateur.

7. Procédé d'interaction avec des images virtuelles disponibles dans un système d'info-divertissement embarqué à bord d'un véhicule selon la revendication 6, dans lequel, après ladite étape consistant à afficher tous les premiers types de personnalité candidats qui sont associés au type d'apparence de l'utilisateur, le procédé comprend en outre les étapes consistant à :
afficher d'autres types de personnalité si aucun premier type de personnalité candidat sélectionné par l'utilisateur n'est reçu à l'intérieur d'un temps prédéfini après l'affichage des premiers types de personnalité candidats, dans lequel les autres types de personnalité sont des types de personnalité autres que les types de personnalité de l'ensemble des premiers types de personnalité candidats qui sont associés au type d'apparence de l'utilisateur ; et
configurer, si un autre type de personnalité sélectionné par l'utilisateur est reçu, le type de personnalité de l'image virtuelle en utilisant l'autre type de personnalité sélectionné par l'utilisateur.

8. Procédé d'interaction avec des images virtuelles disponibles dans un système d'info-divertissement embarqué à bord d'un véhicule selon la revendication 3, dans lequel l'image virtuelle comprend le type de personnalité de l'image virtuelle, et dans lequel ladite étape consistant à générer l'image virtuelle comprend les étapes consistant à :
obtenir des informations de comportement de conduite d'un utilisateur à chaque fois que l'utilisateur conduit le véhicule à l'intérieur d'une période temporelle prédéfinie avant un temps courant, dans lequel les informations de comportement de conduite comprennent un itinéraire de conduite et un paramètre de conduite du véhicule ;
déterminer un mode de conduite habituel de l'utilisateur sur la base des informations de comportement de conduite de l'utilisateur ;
déterminer un deuxième type de personnalité candidat qui est associé au mode de conduite habituel ; et
configurer le type de personnalité de l'image virtuelle en utilisant le deuxième type de personnalité candidat s'il y a seulement un seul deuxième type de personnalité candidat qui est associé au mode de conduite habituel.

9. Procédé d'interaction avec des images virtuelles disponibles dans un système d'info-divertissement embarqué à bord d'un véhicule selon la revendication 8, dans lequel, après ladite étape consistant à déterminer le type de personnalité candidat qui est associé au mode de conduite habituel, le procédé comprend en outre les étapes consistant à :
afficher tous les deuxièmes types de personnalité candidats qui sont associés au mode de conduite s'il y a au moins deux deuxièmes types de personnalité candidats qui sont associés au mode de conduite habituel ; et
recevoir un deuxième type de personnalité candidat sélectionné par l'utilisateur à l'intérieur d'un temps prédéfini après l'affichage des types de personnalité de l'ensemble des deuxièmes types de personnalité candidats, et configurer le type de personnalité de l'image virtuelle en fonction du deuxième type de personnalité candidat sélectionné par l'utilisateur.

10. Procédé d'interaction avec des images virtuelles disponibles dans un système d'info-divertissement embarqué à bord d'un véhicule selon la revendication 9, dans lequel, après ladite étape consistant à afficher tous les types de personnalité candidats qui sont associés au mode de conduite, le procédé comprend en outre les étapes consistant à :
afficher d'autres types de personnalité si aucun deuxième type de personnalité candidat sélectionné par l'utilisateur n'est reçu à l'intérieur du temps prédéfini après l'affichage de tous les deuxièmes types de personnalité candidats, dans lequel les autres types de personnalité sont des types de personnalité autres que les types de personnalité candidats qui sont associés au mode de conduite ; et
configurer, si un autre type de personnalité sélectionné par l'utilisateur est reçu, le type de personnalité de l'image virtuelle en utilisant l'autre type de personnalité sélectionné par l'utilisateur.

11. Procédé d'interaction avec des images virtuelles disponibles dans un système d'info-divertissement embarqué à bord d'un véhicule selon la revendication 3, dans lequel l'image virtuelle comprend le type de personnalité de l'image virtuelle, et dans lequel ladite étape consistant à générer l'image virtuelle comprend les étapes consistant à :
capturer une première image au moyen d'un dispositif de prise de vues qui est installé dans le véhicule, dans lequel la première image comprend des caractéristiques d'apparence d'un utilisateur ;
analyser les caractéristiques d'apparence de l'utilisateur qui sont comprises dans la première image afin de déterminer un type d'apparence de l'utilisateur ;
obtenir des informations de comportement de conduite de l'utilisateur à chaque fois que l'utilisateur conduit le véhicule à l'intérieur d'une période temporelle prédéfinie avant un temps courant ;
déterminer un troisième type de personnalité candidat qui est approprié pour l'utilisateur sur la base du type d'apparence de l'utilisateur et des informations de comportement de conduite déterminées ; et
configurer le type de personnalité de l'image virtuelle sur la base du troisième type de personnalité candidat déterminé.

12. Procédé d'interaction avec des images virtuelles disponibles dans un système d'info-divertissement embarqué à bord d'un véhicule selon l'une quelconque des revendications 1 à 11, dans lequel les services de commande du véhicule comprennent une détermination d'un itinéraire de conduite, et dans lequel le procédé comprend en outre les étapes consistant à :
(S401) obtenir une position de départ du véhicule et une position de destination qui est sélectionnée et/ou saisie par un utilisateur ;
(S402) déterminer tous les itinéraires de conduite allant de la position de départ à la position de destination sur la base de la position de départ, de la position de destination et d'une carte prédéfinie ; et
(S403) sélectionner un itinéraire de conduite qui correspond au type de personnalité obtenu parmi tous les itinéraires de conduite basés sur le type de personnalité obtenu.

13. Procédé d'interaction avec des images virtuelles disponibles dans un système d'info-divertissement embarqué à bord d'un véhicule selon la revendication 12, dans lequel ladite étape consistant à sélectionner l'itinéraire de conduite qui correspond au type de personnalité obtenu parmi tous les itinéraires de conduite basés sur le type de personnalité obtenu comprend les étapes consistant à :
(S4031) déterminer un coût encouru pour chaque itinéraire de conduite sur la base d'informations relatives aux conditions du véhicule sur chaque itinéraire de conduite lorsque le mode de conduite qui est déterminé en fonction du type de personnalité est un mode économique, et sélectionner un itinéraire de conduite qui présente un coût le plus faible en tant qu'itinéraire de conduite qui correspond au type de personnalité, dans lequel le coût comprend au moins un élément de coût parmi un coût en termes de consommation de carburant et des frais de péage ; ou
(S4032) déterminer un temps de conduite qui est requis pour chaque itinéraire de conduite sur la base d'informations relatives aux conditions du véhicule sur chaque itinéraire de conduite lorsque le mode de conduite qui est déterminé en fonction du type de personnalité est un mode sportif, et sélectionner un itinéraire de conduite qui présente un temps de conduite le plus court en tant qu'itinéraire de conduite qui correspond au type de personnalité ; ou
(S4033) déterminer un nombre estimé de bouchons de circulation et/ou un temps estimé de bouchons de circulation pour chaque itinéraire de conduite sur la base d'informations relatives aux conditions du véhicule sur chaque itinéraire de conduite lorsque le mode de conduite qui est déterminé en fonction du type de personnalité comprend un mode confort, et sélectionner un itinéraire de conduite qui correspond au type de personnalité sur la base de l'ensemble des nombres estimés de bouchons de circulation et/ou d'un temps estimé de bouchons de circulation.

14. Véhicule (600), comprenant une mémoire (620), un processeur (610) et un programme informatique qui est stocké dans la mémoire et qui peut être exécuté par le processeur (610), dans lequel le processeur (610), lors de l'exécution du programme informatique, est forcé à mettre en œuvre le procédé d'interaction avec des images virtuelles disponibles dans un système d'info-divertissement embarqué à bord d'un véhicule selon l'une quelconque des revendications 1 à 13.

15. Support de stockage lisible par ordinateur dans lequel un programme informatique est stocké, dans lequel le programme informatique, lorsqu'il est exécuté par un processeur, force le processeur à mettre en œuvre le procédé d'interaction avec des images virtuelles disponibles dans un système d'info-divertissement embarqué à bord d'un véhicule selon l'une quelconque des revendications 1 à 13.
